# EUROPEAN PATENT SPECIFICATION

(11) **EP 2 122 759 B1**
(45) Date of publication and mention of the grant of the patent: **20.02.2019**
(21) Application number: 06835942.1
(22) Date of filing: 18.12.2006
(51) Int. Cl.: H01Q 21/00, B64C 1/36, G01S 13/00, H01P 5/00, H01Q 1/28, H01Q 1/42, H01Q 21/28, H01Q 25/00, H01Q 3/00, G01S 7/03, H01Q 3/26

(54) **MICROWAVE POWER DISTRIBUTION SYSTEM FOR AN AIRBORNE RADAR SYSTEM**
MIKROWELLEN-LEISTUNGSVERTEILUNGSSYSTEM FÜR EIN LUFTGESTÜTZTES RADARSYSTEM
SYSTÈME DE DISTRIBUTION D'ÉNERGIE HYPERFRÉQUENCE POUR UN SYSTÈME RADAR AÉROPORTÉ

(43) Date of publication of application: 25.11.2009
(73) Proprietor: Telefonaktiebolaget LM Ericsson (publ), 164 83 Stockholm (SE)
(72) Inventor: HÖÖK, Anders, 430 63 Hindås (SE)
(74) Representative: Brann AB
(86) International application number: PCT/SE2006/050588
(87) International publication number: WO 2008/076019

(56) References cited:
- WO-A1-2006/120665
- CA-C- 2 037 911
- US-A- 4 870 426
- US-A- 5 923 302
- US-A- 5 986 611
- US-B1- 7 038 620

## Description

### TECHNICAL FIELD

The present invention refers to an antenna system for an airborne radar system. The antenna system comprises a number of first antenna elements and a microwave power distribution system comprising a number of T/R-units arranged to distribute microwave power from a microwave generator to the antenna elements.

### BACKGROUND

In the field of radar devices for airplanes it is known to use a dorsal unit positioned on the airplane body and extending in the longitudinal direction of the airplane, i.e. in the direction from the fore to the aft. The dorsal unit comprises a number of side looking antenna elements positioned along the longitudinal direction of the dorsal unit for side looking purposes. One problem with the dorsal arrangement is that the radar cannot see in a forward or rearward direction without additional antenna elements being placed in the front and the rear of the dorsal unit.

The prior art document patent No. US-5923302 concerns an endfire array with monopoles on the roof of the dorsal unit. Problems with this solution are that it is limited in terms of antenna performance, expensive in terms of a complicated electromagnetic design process, an intricate scan control and complicated manufacturing. Furthermore, the solution results in an undesirable upwards lobe tilt unless the ground plane is bent downwards towards the ends of the dorsal unit.

In prior art is also known to use a separate antenna in the nose of the aircraft for forward looking and an antenna inside a bulbous radome somewhere at the aft for rearward looking. The solution to equip these antennas with extra radar systems has the disadvantage of being costly.

Alternatively, a disadvantage with the forward and rearward looking antennas connected to a common radar is that long high-power RF feeds must be drawn from the radar to the forward/rearward looking antennas. This solution becomes unnecessarily heavy and it blocks the possibility to install other, important sensors in the nose radome. Therefore, a lightweight solution that utilizes the power delivered by the existing T/R-units is to be preferred.

There is thus a need for an antenna solution in a radar system providing full coverage (360°) with no moving parts, minimized drag, minimized weight, minimized system size, low cost, high gain and an electronic scan capability, and an overall improvement of the performance of the antenna system in a radar system with regard to forward and/or rearward looking abilities.

### SUMMARY

The present invention refers to an antenna system for a radar system for an airplane. The antenna system comprises a dorsal unit extending in a longitudinal direction, a lateral direction and a height direction. The dorsal unit comprises two opposing long sides extending in a height direction and a longitudinal direction, and two opposing short sides extending in a lateral direction and the height direction, and an upper side opposing a bottom side each extending in the longitudinal direction and the lateral direction. The longitudinal direction coincides essentially with the longitudinal direction of the airplane when the dorsal unit is mounted onto the airplane. The dorsal unit for a side looking radar system comprises a number of first antenna elements positioned on each of the long sides of the dorsal unit and in the longitudinal direction of the dorsal unit. The antenna system comprises a microwave power distribution system comprising a number of first transmit-receive units (hereinafter called T/R-units) positioned inside the dorsal unit and arranged to feed microwave power to and from the first antenna elements. The power distribution system is arranged to distribute microwave power.

The present invention is characterized in that the microwave power distribution system comprises an assembly of polarized waveguides mounted on top and/or on the bottom of the dorsal unit and/or inside the dorsal unit. The antenna system also comprises antenna devices mounted in connection to the short sides and extending in the height direction. The antenna devices comprise a number of second antenna elements being fed by the power generator via the power distribution system. The antenna devices are connected to the waveguides so that the microwave power supplied by the first T/R-units can be distributed in such a way that an azimuthal scan can be performed by the radar system in the forward and/or in the rearward sectors. The scan is made by controlling the phases of the microwave power between the antenna elements by controlling the first T/R-units in a manner known from prior art. The purpose of the invention is thus to allow scanning of a fore and/or aft lobe without using an antenna in the nose of the airplane and a radome at the tail of the same, or to use the also less satisfactory solution of the above described end fire solution described in US-5923302.

One benefit of the invention is that the waveguide assembly can be designed and manufactured at a low cost. Further advantages are that it less expensive and more lightweight than the nose and/or aft antenna known from prior art. A further advantage with the waveguide assembly is that the integration into the aircraft becomes simpler to perform.

Furthermore, the following advantages are shared with the antenna system described in US-5923302, namely, that the weight does not add significantly to the dorsal unit weight, and that the waveguide assembly can be mounted onto the dorsal unit without major re-design of an existing dorsal unit. Hence, the waveguides and the antenna devices form a collection of parts that may easily be mounted in situ directly onto the existing dorsal unit and interconnected to each other and connected to the already existing devices, for example the first T/R-units. The first T/R-units may be coupled to the assembly of waveguides by connecting all first T/R-units to a dedicated waveguide and to equip adjacent waveguides with apertures for allowing the electromagnetic signal in the dedicated waveguide to the remaining waveguides. In an alternative embodiment one T/R-unit is coupled to one of the waveguides and the number of waveguides and T/R-units are thus the same. In a yet further embodiment, a few T/R-units, say N_{T/R} are coupled to each of the N_{FWG} waveguides so that N_{T/R} multiplied with N_{FWG} approximately equals N_{T/R,TOT}. Since N_{FWG} is equal to N_{AD}, the number of antenna devices, this approximate relation could also be expressed as: N_{T/R} = N_{T/R,TOT} / N_{AD}.

However, the present invention has the following advantages over the device described in US-5923302; it is inexpensive in terms of the electromagnetic design process, it does not need an intricate scan control, and does not need complicated manufacturing. Furthermore, the present invention does not result in an undesirable upwards lobe tilt. Yet furthermore, the present invention may be designed for a better and more controllable antenna performance in terms of lobe widths and scannability.

The assembly may have a planar extension in the lateral direction but may also have a somewhat dome shaped or curved cross-section, but may also be arranged in a staggered manner, i.e. in a zigzag pattern where a number of waveguides being partly or fully on top of other waveguides. The planar assembly of waveguides is advantageous since it is easy to manufacture.

In one embodiment the second antenna elements are connected to second T/R-units being arranged to be controlled in such a way that the microwave power supplied by the first T/R-units can be distributed by the antenna system in such a way that an elevation scan is performed by the radar system in a direction out from one of the short sides or both the short sides, i.e. in the forward direction and/or the aft direction of an airplane when the dorsal unit is mounted onto the airplane.

The antenna system according to the invention may thus be used for a 360° azimuthal scan in a plane described by the lateral direction and the longitudinal direction by use of a control unit for controlling phase and amplitude of each of the first T/R-units to feed microwave energy via a switch to either each of the first starboard antenna elements or to each of the port antenna elements, and by use of a control unit for controlling phase and amplitude of each of N_{FWG} subsets of N_{T/R} T/R-units to feed one of the N_{FWG} waveguides. The T/R-units may thus comprise a switch device controlled by the control unit for controlling the feed of microwave energy directly to the first antenna elements or indirectly to the second antenna elements dependent on the direction of the scan. The first antenna elements are used for essentially a lateral scan on both sides of the dorsal unit and the second antenna elements are used for forward and rearward scan. The antenna system may also perform an elevation scan by controlling the second T/R-units to feed microwave energy to the second antenna elements with a phase increment in the height direction.

The stated and further advantages and embodiments will become apparent in the detailed description of the invention below.

### BRIEF DESCRIPTION OF THE DRAWINGS

The present invention will become more fully understood from the detailed description given herein below in the accompanying drawings which are given by way of illustration only, and thus are not limited to the present invention and wherein:
Fig. 1 schematically shows a microwave power distribution system according to a first embodiment of the invention where an assembly of horizontally polarized rectangular waveguides is placed above a dorsal unit.
Fig. 2 schematically shows a microwave power distribution system according to a second embodiment of the invention where an assembly of vertically polarized rectangular waveguides is placed above a dorsal unit;
Fig. 3 schematically shows a top view of an assembly of rectangular waveguides according to figure 1 or 2 with different lengths;
Fig. 4 schematically shows a front (or aft) view of an assembly of horizontally polarized rectangular waveguides according to figure 1 being fed with electromagnetic power;
Fig. 5 schematically shows a front (or aft) view of an assembly of vertically polarized ridged waveguides according to figure 2 being fed with electromagnetic power;
Fig. 6 schematically shows a top view of an antenna system comprising an assembly of rectangular waveguides according to figure 1 or 2 where all first T/R-units feed a single waveguide, and a power distribution pattern in the waveguide assembly;
Fig. 7 schematically shows a distribution arrangement for an assembly of waveguides according to fig 7 comprising apertures in the side walls between the waveguides;
Fig. 8 schematically shows a top view of an antenna system comprising an assembly of rectangular waveguides according to figure 1 or 2 where the first T/R-units feed all waveguides, and wherein;
Fig. 9 schematically shows a front view of an antenna system according to figure 6 or 8.

### DETAILED DESCRIPTION

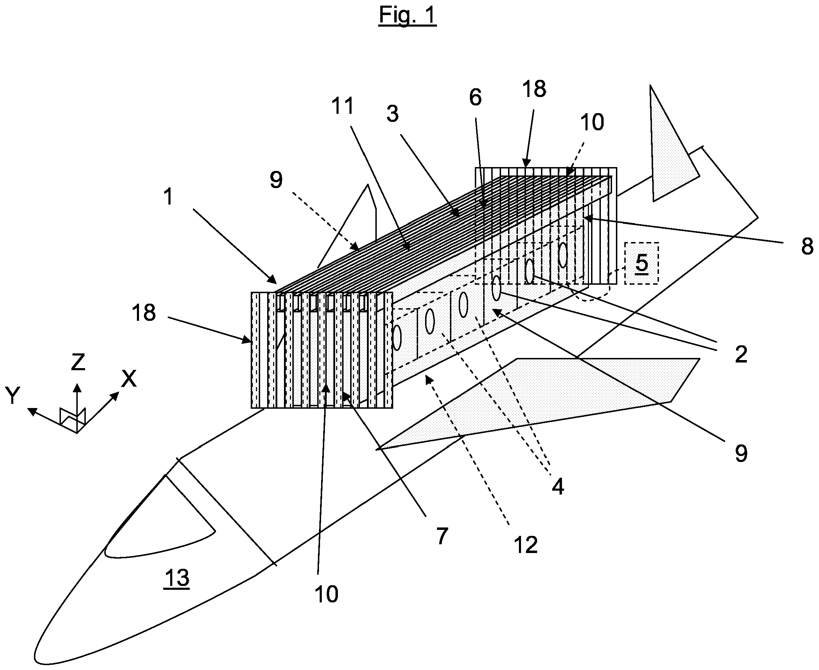

Fig. 1 schematically shows an antenna system 1 for an airborne radar system according to a first embodiment of the invention. The antenna system 1 comprises a number of first antenna elements 2 and a microwave power distribution system 3 comprising a number of first T/R-units 4 arranged to distribute microwave power from a microwave generator 5 to the first antenna elements 2. The microwave power distribution system 3 in figure 1 comprises a planar assembly of polarized waveguides 6 coupled to a number of second antenna elements 7 directed at an angle essentially perpendicular to the number of first antenna elements 2. The first T/R-units 4 are arranged for distribution of microwave energy directly to and from the first antenna elements and indirectly to and from the second antenna elements 2, 7 via the assembly of waveguides 6.

The antenna system comprises a dorsal unit 8 having two opposing long sides 9 extending in a height direction Z and a longitudinal direction X, and two opposing short sides 10 extending in a lateral direction Y and the height direction Z, and an upper side 11 opposing a bottom side 12 each extending in the longitudinal direction X and the lateral direction Y. The directions X, Y and Z are only mentioned in order to facilitate the description and understanding of the invention and are in figure 1 depicted as an orthogonal system. It should be noted that the dorsal unit does not have to be a rectangular box, but may comprise sides having a non-planar extension. For example, the upper side 11 may have a somewhat dome shaped or curved cross-section taken in the lateral direction. The waveguides 6 may then follow the shape of the upper side 11 or may be arranged along a different contour.

In figure 1 the assembly of polarized waveguides 6 is mounted on top of the dorsal unit 8, i.e. on the upper side 11 of the dorsal unit 8. The assembly of waveguides 6 may alternatively be positioned at the bottom side 12 of the dorsal unit 8 or within the dorsal unit 8. In figure 1 the dorsal unit 8 is mounted onto the top of an airplane 13, so that the longitudinal direction of the airplane 13 coincides with the longitudinal direction of the dorsal unit. The airplane 13 is left out in the remaining drawings 2-9 in order to minimize the number of features in the drawings. However, the dorsal unit 8 is intended to be mounted onto a device moving at high speed, particularly in the air. The high speed feature is of importance since it puts high demands on the antenna system with regard to aero dynamical features such as aerodynamic drag as well as temperature and wear due to, for example rain and sand erosion.

In figure 1 the first antenna elements 2 are positioned at least longitudinally on each of the long sides 9 of the dorsal unit 8 and the second antenna elements 7 are positioned in connection to one of the short sides 10 or both the short sides 10. Figure 1 shows antenna devices 18 mounted onto both the short sides 10 of the dorsal unit 8. The antenna devices 18 comprise the second antenna elements 7 which are connected to the waveguides 6. The antenna devices 18 will be described further below.

In figure 1 the first T/R-units 4 are positioned within the dorsal unit 8, but they may be positioned at a location outside the dorsal unit 8, for example inside the airplane 13. The first T/R-units 4 are often referred to as T/R-modules and they serve the purpose of feeding RF signals from the microwave generator 5 to the antenna elements 2, 7 during a transmission period and receiving RF signals from the antenna elements 2, 7 while switching off the energy feed during a listening period. During a first transmission period the first T/R-units 4 feeds RF signals from the power source to the first antenna elements 2 via for example a galvanic coupling or by use of a connect-less electromagnetic coupling.

During a second transmission period the first T/R-units 4 feed energy from the power source to the waveguides 6 which in turn feeds the RF signals to the second antenna elements 7 in the fore or in the aft. The energy feed from the first T/R-units 4 to the waveguides 6 may be done by any suitable means, for example by use of a galvanic conductor, i.e. a flexible cable or the like, connecting a T/R-unit 4 with a transforming device for transforming the electrical signal into an electromagnetic microwave signal. The microwave signal is fed by the transforming device into the waveguides where the microwave signal propagates in a known manner. The energy from the T/R-units 4 may also be fed to the waveguides by means of a connect-less electromagnetic coupling

During the listening periods the antenna elements 2, 7 receive returning electromagnetic power previously sent out having been reflected from an object, for example a target. During the listening period the microwave power distribution system 3 comprises means for feeding the returning microwave energy to receivers for signal processing in the radar system. With regard to the second antenna elements 7, the waveguides 6 are constructed to feed the returning microwave energy directly to the receivers or to a converting device converting the electromagnetic signals in the waveguides 6 into electric signals in cables for further feeding the microwave energy to the receivers. It should be noted that a scanning period may comprise a number of transmission and receiving periods.

In figure 1, the distribution system 3 comprises an assembly of horizontally polarized rectangular waveguides 6 according to the first embodiment of the invention. The waveguides 6 are not limited to a rectangular cross-section, but may have any geometric cross-section suitable for guiding microwaves, for example round, oval, or ridged. However, the following description refers to rectangular waveguides in order to conform to the drawings, but it should be understood that any kind of geometrical shape is possible to replace the rectangular cross-section.

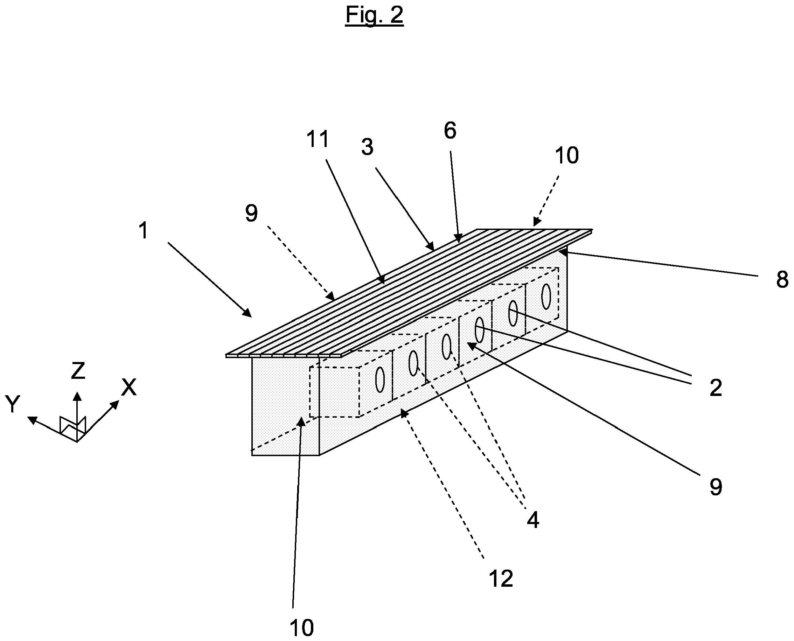

Furthermore, the waveguides are not limited to horizontally polarized waveguides 6, but may in a second embodiment, shown in figure 2, be in the form of vertically polarized rectangular waveguides. The invention is not limited to the two embodiments, but they pose mere examples. The waveguides may thus be circularly polarized or polarized in any other suitable way.

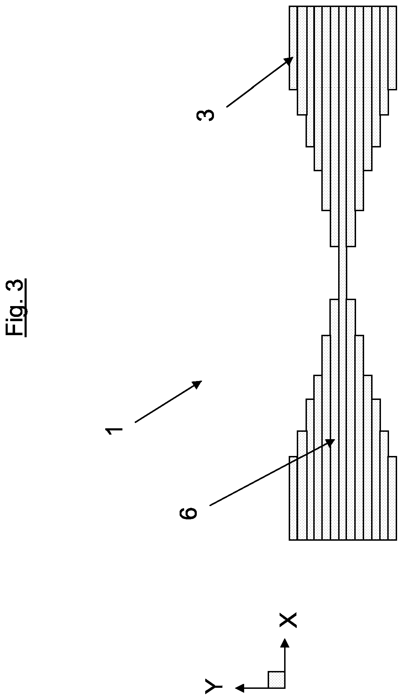

Fig. 3 schematically shows a top view of an assembly of rectangular waveguides 6 according to figure 1 or 2 with different lengths. The advantage of this embodiment is that the weight of the waveguide system 6 is lessened compared to equally long waveguides. However, the waveguides 6 may in another embodiment be equally long or essentially equally long, see for example any of the figures 1, 2, 6, 8 or 9.

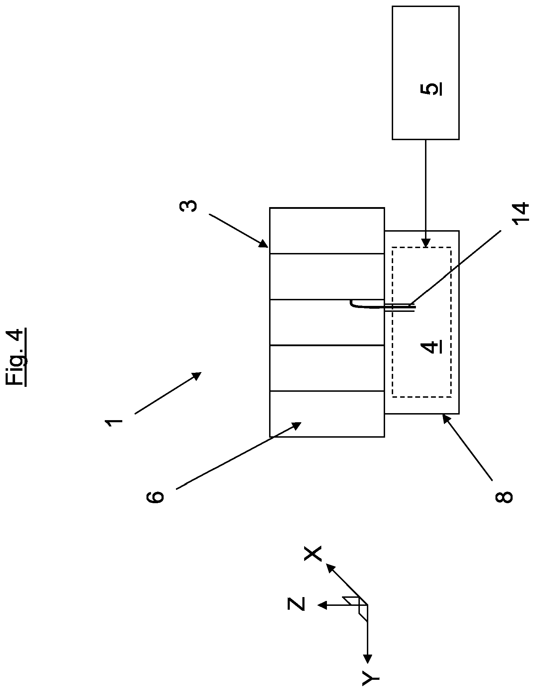

Fig. 4 schematically shows a front (or aft) view of an assembly of horizontally polarized rectangular waveguides according to figure 1 being fed with electromagnetic power from the microwave power generator 5. In figure 4 the waveguides 6 are fed the microwave signal by use of a transforming device comprising a probe 14 being either magnetic, electric or adapted to transmit/transform energy in any other suitable way.

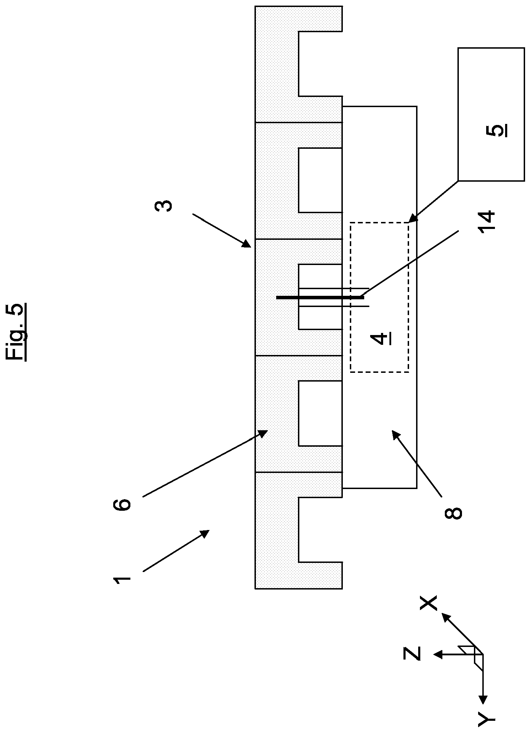

Fig. 5 schematically shows a front (or aft) view of an assembly of vertically polarized ridged waveguides 6 according to figure 2 being fed with electromagnetic power by a probe 14 from the microwave generator. As been stated above, a vast amount of waveguide feeding techniques are known from prior art which may be applied on the invention.

The feeding of energy to the waveguides 6 need to be controlled in order to control the phase shifts in the waveguides 6 in order to direct the energy in the front or aft direction of the airplane. Hence, the phase increment of the T/R-units needs to be set in order to have a constructive adding of energy in the desired direction. Therefore, a control device (not shown) is comprised in the antenna system for control of the first and the second antenna elements 2, 7.

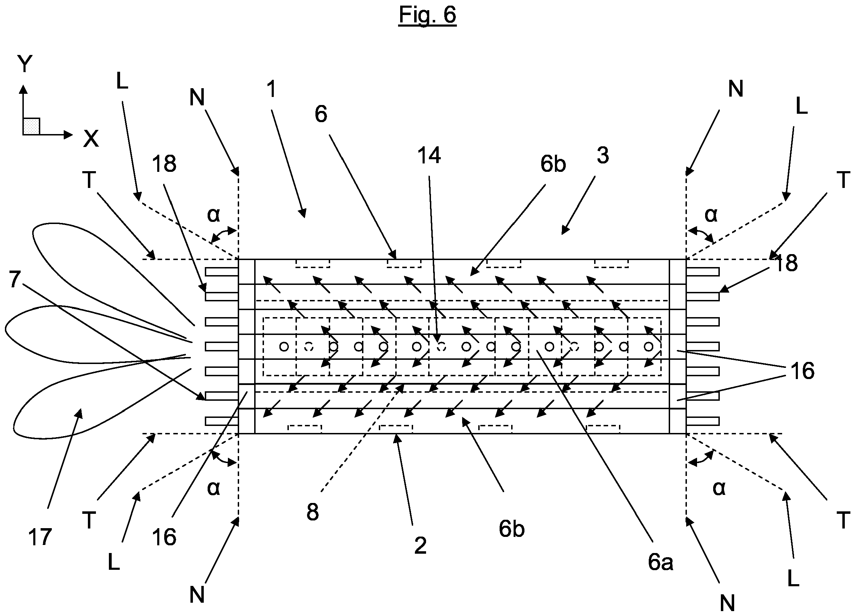

Fig. 6 schematically shows a top view of an antenna system 1 comprising an assembly of rectangular waveguides 6 according to figure 1 or 2 where all first T/R-units 4 feed a single dedicated waveguide 6a. The microwave power is distributed to the adjacent waveguides 6b via apertures (not shown). In figure 6 a number of arrows are shown depicting a power distribution pattern in the waveguide assembly. The waves are distributed from the dedicated waveguide 6a in the lateral direction Y towards the most peripheral waveguides. The signal propagation is intended to be in the longitudinal direction of the waveguide assembly, i.e. in the direction from end to end, and is utilized at the end sections only.

In figure 6 the central waveguide 6a is the dedicated waveguide, but any other waveguide 6 in the waveguide assembly may be designated to be the dedicated waveguide 6a being fed by all first T/R-units 4. In figure 6 is shown that the distribution system 3 comprises two linear assemblies of phase shift devices 16 arranged at each end of the waveguide assembly 6. One phase shift device 16 is positioned at each end of each waveguide 6. The phase shift devices 16 may be of any type known from prior art, for example ferrite phase shift devices. The phase shift devices 16 may be mounted onto the end of the waveguide 6 or may be inserted into an end part of the waveguide 6.

The advantages of the embodiment shown in figure 6 are a highly modular and low-cost design. For instance, only one feed transition, for example the above described probe, between the waveguide 6 assembly and each of the first T/R-units 4 needs to be designed. It does not offer the possibility of scanning of the fore/aft lobe without using a linear assembly of additional phase shifters at the waveguide ends because the phase in one waveguide will be determined by the phases of the neighboring feed waveguide. However, the embodiment has the advantage that the entire waveguide assembly 6 may be manufactured separately from the dorsal unit 8 and may then easily be mounted onto an already existing dorsal unit and connected to the already existing first T/R-units 4 by simple means.

In figure 6 is schematically shown lobes 17 in an azimuthal scan in the X-Y-plane. The lobes extend essentially in the forward direction X and scanning is performed in the lateral direction Y.

The antenna devices according to the invention allows for an azimuthal scan in the X-Y- plane by use of phase shift devices 16 for controlling the second antenna elements. The lobes extend essentially in the forward direction X and scanning is performed in the lateral direction Y. As before, the second antenna elements are being fed microwave power via the waveguides 6 and the control device controls the first T/R-units 4 for the fore or aft direction. The azimuthal scan is then created by use of the control device for controlling the phase shift devices 16 so that the energy is directed for scanning in the X-Y-direction by the second antenna elements 7. The second antenna elements 7 are arranged to cover the forward sector, and in appropriate cases the aft sector, which cannot be scanned by the first antenna elements.

The first antenna elements 2 may be used to scan a sector being 2 times an angle α (2 x α) and the second antenna elements 7 may be used to scan a sector being 2 x (90°-α). In figure 6, the angle α refers to an angle between a normal N extending in the lateral direction Y, i.e. in a direction being essentially perpendicular to the longitudinal direction X of the dorsal unit 8, and a line L. The angle α range between the normal N and a tangent T in the longitudinal direction X. The antenna system 1 may thus be used to scan 360° in the X-Y-plane. It can be mentioned as an example that if the first antenna elements cover a sector of 120° i.e. 2 times 60° on each side of the dorsal unit 8 and the second antenna elements cover a sector of 60°, i.e. 2 times 30° in both the fore and aft direction.

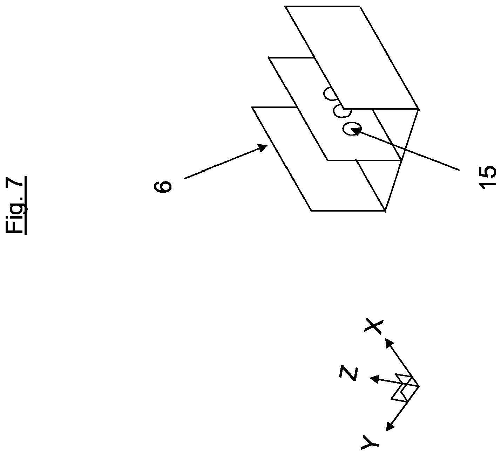

Fig. 7 schematically shows a distribution arrangement for an assembly of waveguides according to fig 6 comprising apertures 15 in the side walls between the waveguides 6 for lateral distribution of the microwave power. The apertures 15 may be slots, or any other suitable through hole.

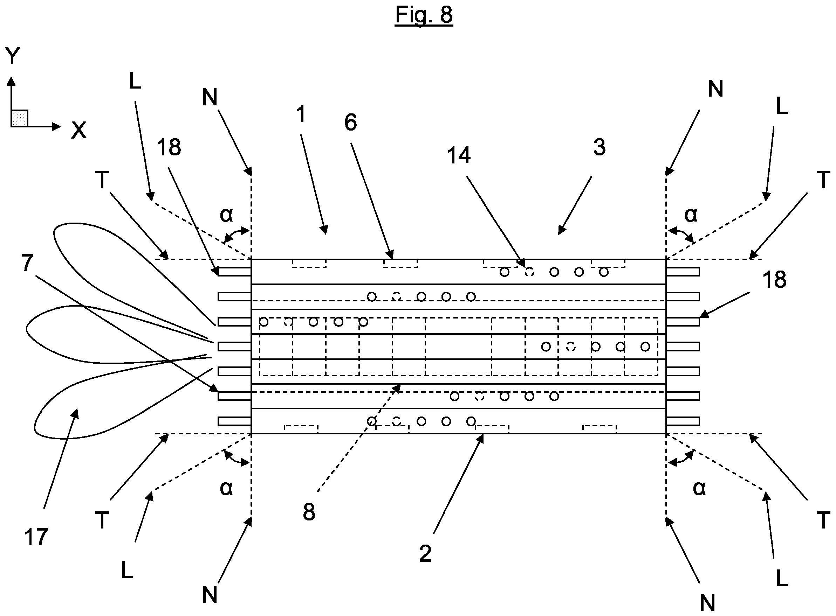

Fig. 8 schematically shows a top view of an antenna system comprising an assembly of rectangular waveguides according to figure 1 or 2 where the first T/R-units 4 feed all waveguides 6. Here, a subset of (i.e. number of) the first T/R-units 4 are connected to each waveguide. All of the waveguides 6, however, are fed by the first T/R-units 4. The fact that the feed points of a waveguide must obey certain phase relationships for efficient propagation does not prohibit that the phases between the waveguides 6 can be given arbitrary values. Hence, fore and/or aft scanning is possible without extra phase shift devices 16. This solution avoids the costs and weight associated with phase shift devices 16. However, the phases of the first T/R-units 4 have to be flexibly controlled by the control device in order to be able to control the direction of propagation of the microwave signal in the cluster of waveguides 6. The control device therefore controls the first T/R-units 4 according to a selected algorithm giving the control of the direction of propagation.

The waveguide assembly 6 may be manufactured separately in the same manner as the waveguide assembly described in connection to figure 6. One difference however between the two embodiments described in connection to figures 6 and 8 respectively is that the embodiment described in connection to figure 8 has to have feed transition to all waveguides, for example by the above described probe. However, since the phase shift devices 16 in figure 6 are not necessary, the embodiment shown in figure 8 also has the advantages of being of a highly modular and low-cost design.

Also in the embodiment described in figure 8, the first and second antenna elements 2, 7 are positioned so that the antenna system 1 can be controlled to cover a 360° azimuthal scan by alternating between the first antenna elements 2 and the second antenna elements 7 as described in connection to figure 6.

It should be noted that each of the first T/R-units 4 are directly coupled to the side looking first antenna elements 4 on each long side of the dorsal unit 8, but that the first T/R-units 4 are indirectly coupled to the second antenna elements 7 via the waveguides 6. Since at least a number of the first T/R-units 4 are switched to a number of the waveguides 6, the phases between the first T/R-units may be controlled so that the common signal from the first T/R-units are fed in the fore or aft direction in the waveguides 6. Hence, the first T/R-switches may be controlled so that the antenna system may perform a scan on all sides of the dorsal unit 8.

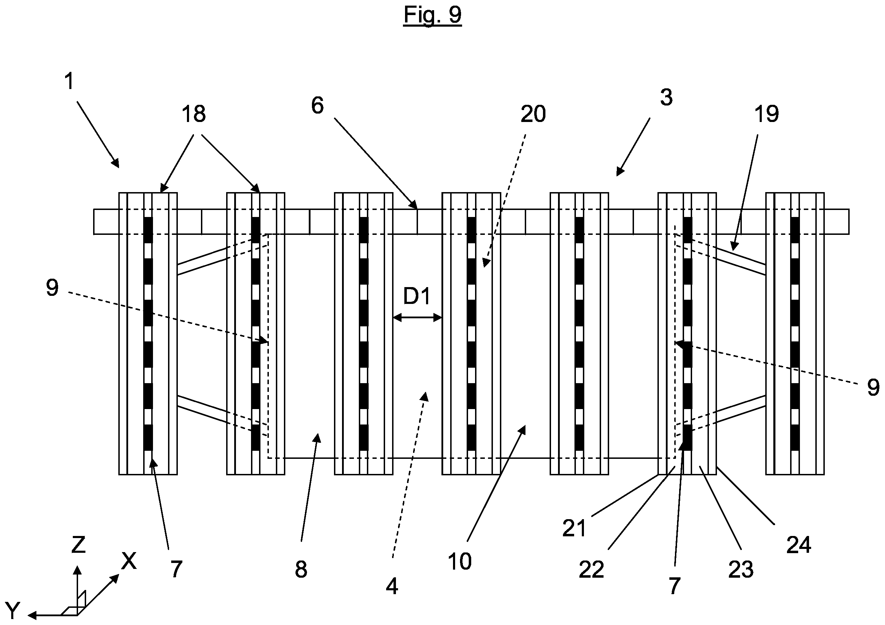

Fig. 9 schematically shows a front view of an antenna system according to figure 6 or 8. The antenna system 1 comprises the antenna devices 18 mounted in connection to one of the short sides 10 or both the short sides 10 and extending in the height direction Z. The antenna devices 18 are preferably positioned essentially parallel to each other with a selected distance D1 between them. The selected distance D1 may be decided dependent on the desired performance of the antenna system 1 and on minimizing the aerodynamic drag. It should be noted that it is the center-to-center distance that relates to the desired performance and that the distance D1 in relation to the center-to-center distance that relates to drag. The second antenna elements 7 are comprised in the antenna devices 18 and are preferably positioned in each of the antenna devices 18 in a row, i.e. in a series after each other in the height direction Z.

The antenna devices 18 may be mounted directly onto the short side(s) 10 or may be mounted to the dorsal unit via brackets 19. The antenna devices may also be interconnected via brackets 19 such that the antenna devices form a separate unit easily mounted onto an already existing dorsal unit. The antenna devices are connected to the waveguides by any known means, for example by contact-less connector means or galvanic connector means. The number of antenna devices 18 is correlated to the number of waveguides in such a way that there is one antenna device connected to each waveguide 6 One advantage of using the antenna devices 18 is that the effective antenna aperture area is increased at the same time as the aero dynamic drag is kept to a minimum. The increased effective antenna aperture area gives the possibilities of increased gain and thus the possibility of increased gain and thus to create more narrow lobes 17 for better detection of targets.

Furthermore, the antenna devices 18 are connected to the waveguides 6 so that the microwave power supplied by the first T/R-units 4 can be distributed by the antenna system in such a way that an azimuthal scan according to the above is performed by the radar system in a direction out from one of the short sides 10 or both the short sides 10, i.e. in the forward direction and/or the aft direction of an airplane when the dorsal unit is mounted onto an airplane.

In a further embodiment the second antenna elements 7 are connected to second T/R-units 20 positioned between the waveguides 6 and the second antenna elements 7. The second T/R-units 20 are arranged to be controlled by the control unit. The microwave power supplied by the first T/R-units 4 is fed to the second T/R-units 20 via the waveguides 6. The second T/R-units 20 are controlled by the control unit in such a way that the phase increment between the second antenna elements 7 gives an elevation scan in a direction out from one or both the short sides 10, i.e. in the forward direction and/or the rearward direction of an airplane when the dorsal unit is mounted onto an airplane. The antenna system 1 may thus use the first T/R-units 4 for an azimuthal scan and the second T/R-units for an elevation scan.

The above described scans are made by controlling phases in different antenna elements by the control of the first- and/or the second T/R-units 20 in a manner known from prior art and will not be explained further.

The antenna devices 18 may be realized in a number of different ways. For example, each antenna device 18 comprises a layered structure comprising in the lateral direction an electrically conducting layer 21 onto a nonconducting 22 layer positioned adjacent a number of second antenna elements 7 and on the other side of the antenna elements 7 a second nonconducting layer 23 covered with a conductive layer 24. The size of the antenna devices 18 is dependent on the intended use of the antenna system, i.e. the intended use of the radar system that comprises the antenna system.

Below is an example of an antenna device suitable for an airborne S-band radar: The measurements are 10mm times 100mm times the height which may be less than, equal to or greater than the height of the dorsal unit. The antenna devices are separated by a selected distance D1 = 70-80 mm depending on a number of parameters, for example the wavelength of the microwave transmitted. The separation therefore has to be calculated with regard to these parameters.

As can be seen in figure 8, the antenna devices 18 form an assembly of antenna devices 18 forming an antenna. One benefit of using such thin antenna devices 18 in the proposed manner is that the antenna may extend outside the dorsal unit in the lateral direction without significant increase of aerodynamic drag. The possibility to extend the cross-section of the antenna system in the forward and/or aft direction is a major benefit of the invention since the more antenna devices and the wider the antenna system is in the lateral direction, the narrower can the lobe be formed.

Further advantages of the invention are that a dorsal fin assembly is thin, light and requires no moving parts, and thus advantageously replaces the previously known AWACS rotodome type antenna.

The invention is not limited to the above described embodiments, but may be varied within the scope of the appended claims. For example, the embodiments described in connection to figure 6 and 8 may be combined so that a number of waveguides are fed microwave power by a number of the first T/R-units and where the remaining waveguides having not been fed directly by the first T/R-units are fed by distribution via apertures in the walls of the waveguides. However, all embodiments have the advantage that a part of the power from each T/R-module to a series of waveguides in, above or under the dorsal unit, the summed RF-power can be transmitted to either end (fore/aft) of the dorsal unit without significant loss of effect by use of an easily manufactured and assembled construction comprising a collection of parts.

## Claims

1. An antenna system (1) for an airborne radar system, the antenna system (1) comprising a number of first antenna elements (2) and a microwave power distribution system (3) comprising a number of first T/R-units (4) being coupled to the number of first antenna elements (2) for distribution of microwave power to the number of first antenna elements (2), **characterized in that** the microwave power distribution system (3) comprises an assembly of waveguides (6, 6a. 6b) coupled to a number of second antenna elements (7) directed at an angle essentially perpendicular to the number of first antenna elements (2) such that the number of first antenna elements (2) and the number of second antenna elements (7) being essentially perpendicular to each other, wherein the number of first T/R-units (4) are coupled to the assembly of waveguides (6, 6a, 6b) for distribution of microwave energy to the number of second antenna elements (7).

2. An antenna system (1) according to claim 1, **characterized in that** the antenna system (1) comprises a dorsal unit (8) having two opposing long sides (9) extending in a height direction (Z) and a longitudinal direction (X), and two opposing short sides (10) extending in a lateral direction (Y) and the height direction (Z), and an upper side (11) opposing a bottom side (12) each extending in the longitudinal direction (X) and the lateral direction (Y), wherein the assembly of waveguides (6, 6a, 6b) are mounted on the upper side (11) or on the bottom side (12) of the dorsal unit (8) or inside the dorsal unit (8).

3. An antenna system (1) according to claim 2, **characterized in that** the number of first antenna elements (2) are positioned at least longitudinally (X) on each of the long sides (9) of the dorsal unit (8) and that the number of second antenna elements (7) are positioned in connection to one of the short sides (10) or both the short sides.

4. An antenna system (1) according to claim 2 or 3, **characterized in that** the antenna system (1) comprises antenna devices (18) mounted in connection to the assembly of waveguides (6, 6a, 6b) and extending in the height direction (Z), wherein the number of second antenna elements (7) are comprised in the antenna devices (18).

5. An antenna system (1) according to claim 4, **characterized in that** the antenna devices (18) are mounted in connection to one of the short sides (10) or both the short sides (10) and extending in the height direction (Z), wherein the number of second antenna elements (7) are comprised in the antenna devices (18).

6. An antenna system (1) according to claim 4 or 5, **characterized in that** the antenna devices (18) are positioned essentially parallel to each other.

7. An antenna system (1) according to any one of claims 4-6, **characterized in that** the antenna devices (18) are connected to the assembly of waveguides (6, 6a, 6b) so that the microwave power supplied by the number of first T/R-units (4) can be distributed by the antenna system (1) in such a way that an azimuthal scan is performed by the radar system in a direction out from one of the short sides or both the short sides, i.e. in the forward direction and/or the rearward direction of an airplane when the dorsal unit (8) is mounted onto an airplane (13).

8. An antenna system (1) according to any one of claims 4-7, **characterized in that** the number of second antenna elements (7) are positioned in the antenna devices (18) in series after each other in the height direction.

9. An antenna system (1) according to claim 8, **characterized in that** the number of second antenna elements (7) are connected to a number of second T/R-units (20) being arranged to be controlled in such a way that the microwave power supplied by the number of first T/R-units (4) can be distributed by the antenna system (1) in such a way that an elevation scan is performed by the radar system in a direction out from one of the short sides (10) or both the short sides (10), i.e. in the forward direction and/or the aft direction of an airplane (13) when the dorsal unit (8) is mounted onto the airplane (13).

10. An antenna system (1) according to any one of claims 1-9, **characterized in that** the number of first antenna elements (2) are connected to the number of first T/R-units (4) so that the microwave power supplied by the number of first T/R-units (4) can be distributed by the antenna system (1) in such a way that an azimuthal scan is performed by the radar system in a direction out from one of the long sides (9) or both the long sides (9), i.e. in the lateral direction (Y) of an airplane (13) when the dorsal unit (8) is mounted onto the airplane (13).

11. An antenna system (1) according to any one of the preceding, **characterized in that** the antenna system (1) comprises a control device for controlling the number or first T/R-units (4) and thereby the phase shifts of the microwave power between the number of first and the number of second antenna elements (2, 7) .

12. An antenna system (1) according to any one of the preceding claims, **characterized in that** one dedicated waveguide (6a) out of the assembly of waveguides (6, 6a, 6b) in the distribution system (3) is connected to all the number of first T/R-units (4), wherein the assembly of waveguides (6, 6a, 6b) comprise apertures (15) electromagnetically connecting adjacent waveguides (6b) out of the assembly of waveguides (6, 6a, 6b) so that the microwave power is distributed from the dedicated waveguide (6a) to the remaining waveguides (6b) in the distribution system (3).

13. An antenna system (1) according to claim 12, **characterized in that** the apertures (15) are positioned in the walls of the assembly of waveguides (6, 6a, 6b) for lateral distribution of the microwave power.

14. An antenna system (1) according to any one of claims 12 or 13, **characterized in that** the distribution system (3) comprises phase shift devices (16) positioned at each end of each waveguide out of the assembly of waveguides (6, 6a, 6b) for phase shifting of the microwave power in each waveguide out of the assembly of waveguides (6, 6a, 6b).

15. An antenna system (1) according to any one of claims 1-11, **characterized in that** each waveguide out of the assembly of waveguides (6, 6a, 6b) in the distribution system (3) is connected to at least one of the number of first T/R-units (4).

16. An antenna system (1) according to any one of the preceding claims, **characterized in that** the number of first and the number of second antenna elements (2, 7) are positioned so that the antenna system (1) can be controlled to cover a 360° azimuthal scan by alternating between the number of first antenna elements (2) and the number of second antenna elements (7).

17. An antenna system (1) according to any one of the preceding claims, **characterized in that** the assembly of waveguides (6, 6a, 6b) are laterally polarized or polarized in the height direction.

## Patentansprüche

1. Antennensystem (1) für ein luftgestütztes Radarsystem, wobei das Antennensystem (1) eine Anzahl von ersten Antennenelementen (2) und ein Mikrowellen-Leistungsverteilungssystem (3) umfasst, das eine Anzahl von ersten T/R-Einheiten (4) umfasst, die zur Verteilung der Mikrowellenenergie an die Anzahl von ersten Antennenelementen (2) mit der Anzahl von ersten Antennenelementen (2) gekoppelt ist, **dadurch gekennzeichnet, dass** das Mikrowellen-Leistungsverteilungssystem (3) eine Anordnung von Wellenleitern (6, 6a. 6b) umfasst, die mit einer Anzahl von zweiten Antennenelementen (7) gekoppelt ist, die in einem Winkel gerichtet ist, der im Wesentlichen derart senkrecht zu der Anzahl von ersten Antennenelementen ist (2), dass die Anzahl von ersten Antennenelementen (2) und die Anzahl von zweiten Antennenelementen (7) im Wesentlichen senkrecht zueinander stehen, wobei die Anzahl von ersten T/R-Einheiten (4) mit der Anordnung von Wellenleitern (6, 6a, 6b) zur Verteilung der Mikrowellenenergie an die zweite Anzahl von Antennenelementen (7) gekoppelt ist.

2. Antennensystem (1) nach Anspruch 1, **dadurch gekennzeichnet, dass** das Antennensystem (1) eine Rückeneinheit (8) umfasst, die zwei entgegengesetzte lange Seiten (9), die sich in eine Höhenrichtung (Z) und in eine Längsrichtung (X) erstrecken, zwei gegenüberliegende kurze Seiten (10), die sich in eine laterale Richtung (Y) und die Höhenrichtung (Z) erstrecken, und eine Oberseite (11) aufweist, die einer Bodenseite (12) gegenüber liegt, die sich jeweils in der Längsrichtung (X) und der lateralen Richtung (Y) erstrecken, wobei die Anordnung von Wellenleitern (6, 6a, 6b) an der Oberseite (11) oder an der Bodenseite (12) der Rückeneinheit (8) oder innerhalb der Rückeneinheit (8) montiert ist.

3. Antennensystem (1) nach Anspruch 2, **dadurch gekennzeichnet, dass** die Anzahl von ersten Antennenelementen (2) mindestens in Längsrichtung (X) auf jeder der langen Seiten (9) der Rückeneinheit (8) positioniert ist und die Anzahl von zweiten Antennenelementen (7) in Verbindung mit einer der kurzen Seiten (10) oder mit den beiden kurzen Seiten positioniert ist.

4. Antennensystem (1) nach Anspruch 2 oder 3, **dadurch gekennzeichnet, dass** das Antennensystem (1) Antennenvorrichtungen (18) umfasst, die in Verbindung mit der Anordnung von Wellenleitern (6, 6a, 6b) montiert sind und sich in die Höhenrichtung (Z) erstrecken, wobei die Anzahl von zweiten Antennenelementen (7) in den Antennenvorrichtungen (18) enthalten ist.

5. Antennensystem (1) nach Anspruch 4, **dadurch gekennzeichnet, dass** die Antennenvorrichtungen (18) in Verbindung mit einer der kurzen Seiten (10) oder mit beiden kurzen Seiten (10) montiert sind und sich in die Höhenrichtung (Z) erstrecken, wobei die Anzahl von zweiten Antennenelementen (7) in den Antennenvorrichtungen (18) enthalten ist.

6. Antennensystem (1) nach Anspruch 4 oder 5, **dadurch gekennzeichnet, dass** die Antennenvorrichtungen (18) im Wesentlichen parallel zueinander positioniert sind.

7. Antennensystem (1) nach einem der Ansprüche 4-6, **dadurch gekennzeichnet, dass** die Antennenvorrichtungen (18) mit der Anordnung von Wellenleitern (6, 6a, 6b) derart verbunden sind, dass die Mikrowellenenergie, die durch die erste Anzahl von T/R-Einheiten (4) bereitgestellt wird, durch das Antennensystem (1) so verteilt werden kann, dass eine azimutale Abtastung durch das Radarsystem in eine Richtung nach außen von einer der kurzen Seiten oder den beiden kurzen Seiten durchgeführt wird, d. h. in die vordere Richtung und/oder die hintere Richtung eines Flugzeugs, wenn die Rückeneinheit (8) an einem Flugzeug (13) montiert ist.

8. Antennensystem (1) nach einem der Ansprüche 4-7, **dadurch gekennzeichnet, dass** die zweite Anzahl von Antennenelementen (7) in den Antennenvorrichtungen (18) hintereinander in Reihe in der Höhenrichtung positioniert sind.

9. Antennensystem (1) nach Anspruch 8, **dadurch gekennzeichnet, dass** die Anzahl von zweiten Antennenelementen (7) mit einer Anzahl von zweiten T/R-Einheiten (20) verbunden ist, die angeordnet sind, um so gesteuert zu werden, dass die Mikrowellenenergie, die durch die Anzahl von ersten T/R-Einheiten (4) bereitgestellt wird, durch das Antennensystem (1) derart verteilt werden kann, dass eine Elevationsabtastung durch das Radarsystem in eine Richtung nach außen von einer der kurzen Seiten (10) oder den beiden kurzen Seiten (10) durchgeführt wird, d. h. in die vordere Richtung und/oder die hintere Richtung eines Flugzeugs (13), wenn die Rückeneinheit (8) an einem Flugzeug (13) montiert ist.

10. Antennensystem (1) nach einem der Ansprüche 1-9, **dadurch gekennzeichnet, dass** die Anzahl von ersten Antennenelementen (2) mit der Anzahl von ersten T/R-Einheiten (4) derart verbunden ist, dass die Mikrowellenenergie, die durch die Anzahl von ersten T/R-Einheiten (4) bereitgestellt wird, durch das Antennensystem (1) so verteilt werden kann, dass eine azimutale Abtastung durch das Radarsystem in eine Richtung nach außen von einer der langen Seiten (9) oder den beiden langen Seiten (9) durchgeführt wird, d. h. in der lateralen Richtung (Y) eines Flugzeugs (13), wenn die Rückeneinheit (8) an einem Flugzeug (13) montiert ist.

11. Antennensystem (1) nach einem der vorstehenden Ansprüche, **dadurch gekennzeichnet, dass** das Antennensystem (1) eine Steuervorrichtung zum Steuern der Anzahl von ersten T/R-Einheiten (4) und damit die Phasenverschiebungen der Mikrowellenenergie zwischen der Anzahl der ersten und der Anzahl der zweiten Antennenelemente (2, 7) umfasst.

12. Antennensystem (1) nach einem der vorstehenden Ansprüche, **dadurch gekennzeichnet, dass** ein dedizierter Wellenleiter (6a) aus der Anordnung von Wellenleitern (6, 6a, 6b) in dem Verteilungssystem (3) mit allen der Anzahl von ersten T/R-Einheiten (4) verbunden ist, wobei die Anordnung von Wellenleitern (6, 6a, 6b) Aperturen (15) umfasst, die angrenzende Wellenleiter (6b) aus der Anordnung von Wellenleitern (6, 6a, 6b) elektromagnetisch binden, sodass die Mikrowellenenergie von dem dedizierten Wellenleiter (6a) zu den verbliebenen Wellenleitern (6b) in dem Verteilungssystem (3) verteilt wird.

13. Antennensystem (1) nach Anspruch 12, **dadurch gekennzeichnet, dass** die Aperturen (15) in den Wänden der Anordnung von Wellenleitern (6, 6a, 6b) zur lateralen Verteilung der Mikrowellenenergie positioniert sind.

14. Antennensystem (1) nach einem der Ansprüche 12 oder 13, **dadurch gekennzeichnet, dass** das Verteilungssystem (3) Phasenverschiebungsvorrichtungen (16) umfasst, die an jedem Ende jedes Wellenleiters aus der Anordnung von Wellenleitern (6, 6a, 6b) zum Phasenverschieben der Mikrowellenenergie in jedem Wellenleiter aus der Anordnung von Wellenleitern (6, 6a, 6b) positioniert sind.

15. Antennensystem (1) nach einem der Ansprüche 1-11, **dadurch gekennzeichnet, dass** jeder Wellenleiter aus der Anordnung von Wellenleitern (6, 6a, 6b) in dem Verteilungssystem (3) mit mindestens einer der Anzahl von ersten T/R-Einheiten (4) verbunden ist.

16. Antennensystem (1) nach einem der vorstehenden Ansprüche, **dadurch gekennzeichnet, dass** die Anzahl von ersten und die Anzahl von zweiten Antennenelementen (2, 7) so positioniert sind, dass das Antennensystem (1) gesteuert werden kann, um eine azimutale Abtastung von 360° durch Wechseln zwischen der Anzahl von ersten Antennenelementen (2) und der Anzahl von zweiten Antennenelementen (7) abzudecken.

17. Antennensystem (1) nach einem der vorstehenden Ansprüche, **dadurch gekennzeichnet, dass** die Anordnung von Wellenleitern (6, 6a, 6b) lateral polarisiert oder in der Höhenrichtung polarisiert ist.

## Revendications

1. Système d'antenne (1) pour un système radar aéroporté, le système d'antenne (1) comprenant une pluralité de premiers éléments d'antenne (2) et un système de distribution de puissance hyperfréquence (3) comprenant une pluralité de premières unités E/R (4) qui sont couplées à la pluralité de premiers éléments d'antennes (2) pour la distribution d'une puissance hyperfréquence à la pluralité de premiers éléments d'antennes (2), **caractérisé en ce que** le système de distribution de puissance hyperfréquence (3) comprend un ensemble de guides d'ondes (6, 6a, 6b) couplés à une pluralité de seconds éléments d'antenne (7) dirigés selon un angle essentiellement perpendiculaire à la pluralité de premiers éléments d'antenne (2) de sorte que la pluralité de premiers éléments d'antenne (2) et la pluralité de second éléments d'antenne (7) sont essentiellement perpendiculaires les uns aux autres, dans lequel la pluralité de premières unités E/R (4) sont couplées à l'ensemble de guides d'ondes (6, 6a, 6b) pour la distribution d'énergie hyperfréquence à la pluralité de seconds éléments d'antenne (7).

2. Système d'antenne (1) selon la revendication 1, **caractérisé en ce que** le système d'antenne (1) comprend une unité dorsale (8) ayant deux côtés longs opposés (9) s'étendant dans une direction (Z) de la hauteur et une direction longitudinale (X), et deux côtés courts opposés (10) s'étendant dans une direction latérale (Y) et la direction (Z) de la hauteur, et un côté supérieur (11) opposé à un côté inférieur (12) s'étendant chacun dans la direction longitudinale (X) et la direction latérale (Y), dans lequel l'ensemble de guides d'ondes (6, 6a, 6b) sont montés sur le côté supérieur (11) ou sur le côté inférieur (12) de l'unité dorsale (8) ou à l'intérieur de l'unité dorsale (8).

3. Système d'antenne (1) selon la revendication 2, **caractérisé en ce que** la pluralité de premiers éléments d'antenne (2) sont positionnés au moins longitudinalement (X) sur chacun des côtés longs (9) de l'unité dorsale (8) et **en ce que** la pluralité de seconds éléments d'antenne (7) sont positionnés en relation avec l'un des côtés courts (10) ou les deux côtés courts.

4. Système d'antenne (1) selon la revendication 2 ou 3, **caractérisé en ce que** le système d'antenne (1) comprend des dispositifs d'antenne (18) montés en relation avec l'ensemble de guides d'ondes (6, 6a, 6b) et s'étendant dans la direction (Z) de la hauteur, dans lequel la pluralité de seconds éléments d'antenne (7) sont compris dans les dispositifs d'antenne (18).

5. Système d'antenne (1) selon la revendication 4, **caractérisé en ce que** les dispositifs d'antenne (18) sont montés en relation avec l'un des côtés couts (10) ou les deux côtés courts (10) et s'étendent dans la direction (Z) de la hauteur, dans lequel la pluralité de seconds éléments d'antenne (7) sont compris dans les dispositifs d'antenne (18).

6. Système d'antenne (1) selon la revendication 4 ou 5, **caractérisé en ce que** les dispositifs d'antenne (18) sont positionnés essentiellement de manière parallèle entre eux.

7. Système d'antenne (1) selon l'une quelconque des revendications 4 à 6, **caractérisé en ce que** les dispositifs d'antenne (18) sont connectés à l'ensemble de guides d'ondes (6, 6a, 6b) de sorte que l'énergie hyperfréquence fournie par la pluralité de premières unités E/R (4) peut être distribuée par le système d'antenne (1) de façon à ce qu'un balayage azimutal soit effectué par le système radar dans une direction partant d'un des côtés courts ou des deux côtés courts, c'est-à-dire dans la direction avant et/ou la direction arrière d'un avion lorsque l'unité dorsale (8) est montée sur un avion (13).

8. Système d'antenne (1) selon l'une quelconque des revendications 4 à 7, **caractérisé en ce que** la pluralité de seconds éléments d'antenne (7) sont positionnés dans les dispositifs d'antenne (18) en série les uns après les autres dans la direction de la hauteur.

9. Système d'antenne (1) selon la revendication 8, **caractérisé en ce que** la pluralité de seconds éléments d'antenne (7) sont connectés à une pluralité de secondes unités E/R (20) qui sont agencées pour être commandées de façon à ce que la puissance hyperfréquence fournie par la pluralité de premières unités E/R (4) puisse être distribuée par le système d'antenne (1) de manière à ce qu'un balayage en élévation soit réalisé par le système radar dans une direction partant d'un des côtés courts (10) ou des deux côtés courts (10), c'est-à-dire dans la direction avant et/ou la direction arrière d'un avion (13) lorsque l'unité dorsale (8) est montée sur l'avion (13).

10. Système d'antenne (1) selon l'une quelconque des revendications 1 à 9, **caractérisé en ce que** la pluralité de premiers éléments d'antenne (2) sont connectés à la pluralité de premières unités E/R (4) de sorte que la puissance hyperfréquence fournie par la pluralité de premières unités E/R (4) peuvent être distribuées par le système d'antenne (1) de façon à ce qu'un balayage azimutal soit effectué par le système radar dans une direction partant d'un des côtés longs (9) ou des deux côtés longs (9), c'est-à-dire dans la direction latérale (Y) d'un avion (13) lorsque l'unité dorsale (8) est montée sur l'avion (13).

11. Système d'antenne (1) selon l'une quelconque des revendications précédentes, **caractérisé en ce que** le système d'antenne (1) comprend un dispositif de commande pour commander la pluralité de premières unités E/R (4) et ainsi les déphasages de la puissance hyperfréquence entre la pluralité de premiers et la pluralité de seconds éléments d'antenne (2, 7) .

12. Système d'antenne (1) selon l'une quelconque des revendications précédentes, **caractérisé en ce qu'**un guide d'ondes (6a) dédié issu de l'ensemble de guide d'ondes (6, 6a, 6b) dans le système de distribution (3) est connecté à toute la pluralité de premières unités E/R (4), dans lequel l'ensemble de guides d'ondes (6, 6a, 6b) comprennent des ouvertures (15) connectant de manière électromagnétique des guides d'ondes (6b) adjacents issus de l'ensemble de guides d'ondes (6, 6a, 6b) de sorte que la puissance hyperfréquence est distribuée à partir du guide d'onde (6a) dédié vers les guides d'ondes (6b) restants dans le système de distribution (3) .

13. Système d'antenne (1) selon la revendication 12, **caractérisé en ce que** les ouvertures (15) sont positionnées dans les parois de l'ensemble de guides d'ondes (6, 6a, 6b) pour la distribution latérale de la puissance hyperfréquence.

14. Système d'antenne (1) selon l'une quelconque des revendications 12 ou 13, **caractérisé en ce que** le système de distribution (3) comprend des dispositifs de déphasage (16) positionnés au niveau de chaque extrémité de chaque guide d'onde issu de l'ensemble de guides d'ondes (6, 6a, 6b) pour un déphasage de la puissance hyperfréquence dans chaque guide d'ondes issu de l'ensemble de guides d'ondes (6, 6a, 6b)

15. Système d'antenne (1) selon l'une quelconque des revendications 1 à 11, **caractérisé en ce que** chaque guide d'ondes issu de l'ensemble de guides d'ondes (6, 6a, 6b) dans le système de distribution (3) est connecté à au moins l'une de la pluralité de premières unités E/R (4).

16. Système d'antenne (1) selon l'une quelconque des revendications précédentes, **caractérisé en ce que** la pluralité de premiers et la pluralité de seconds éléments d'antenne (2, 7) sont positionnés de sorte que le système d'antenne (1) peut être commandé pour couvrir un balayage azimutal de 360° en alternant entre la pluralité de premiers éléments d'antenne (2) et la pluralité de seconds éléments d'antenne (7).

17. Système d'antenne (1) selon l'une quelconque des revendications précédentes, **caractérisé en ce que** l'ensemble de guides d'ondes (6, 6a, 6b) sont polarisés latéralement ou polarisés dans la direction de la hauteur.
